# EUROPÄISCHE PATENTANMELDUNG

(11) **EP 1 008 477 A2**
(43) Veröffentlichungstag der Anmeldung: **14.06.2000**
(21) Anmeldenummer: 99121822.3
(22) Anmeldetag: 04.11.1999
(51) Int. Cl.: B60J 7/00

(54) **Ausstellbares Dachteil eines Fahrzeuges**

(30) Priorität: 09.12.1998 DE 19856731
(71) Anmelder: Bayerische Motoren Werke Aktiengesellschaft, 80809 München (DE)
(72) Erfinder: Budweiser, Friedrich, 86672 Thierhaupten (DE)

(57) **Zusammenfassung**

Die Erfindung betrifft ein ausstellbares Dachteil (3) eines Fahrzeuges, insbesondere ausstellbares Schiebe-Dachteil eines Personenkraftwagens mit einem die sich in der Ausstellposition ergebende Dachöffnung abdeckenden netzartigen Filterelement (6). Das netzartige Filterelement (6) kann durch einen elastisch verformbaren, dem ausstellbaren Endbereich des Dachteiles (3) sowie dem entsprechenden Dachrahmen-Abschnitt angepaßten und am Endbereich des Dachteiles (3) befestigten Bügel (6a) gebildet sein, der eine die besagte Dachöffnung abdeckende Netzstruktur (6b) trägt und der sich in der Ausstellposition des Dachteiles unter Vorspannung stehend am entsprechenden Dachrahmen-Abschnitt abstützt. Beansprucht wird ferner ein netzartiges Filterelement (6) für ein ausstellbares Dachteil, welches nachträglich am Dachteil und/oder am Dachrahmen befestigbar ist.

## Beschreibung

Die Erfindung betrifft ein ausstellbares Dachteil eines Fahrzeuges, insbesondere ein ausstellbares Schiebe-Dachteil eines Personenkraftwagens, welches auch als Schiebehebedach bezeichnet wird und bspw. in der DE 34 42 616 C2 dargestellt ist.

Es ist bereits bekannt (DE-OS 26 36 749), an einem Schiebedach eines PKW's ein Schutznetz vorzusehen, um das Eindringen von Gegenständen oder Insekten in den Fahrzeuginnenraum durch das zurückgeschobene und somit den zugehörigen Dachausschnitt freigebende Schiebe-Dachteil zu verhindern. Eine entsprechende Schutzmöglichkeit für die ausgestellte, d.h. angehobene Position des Dachteiles, in welcher dieses mit seiner Vorderkante am den Dachausschnitt begrenzenden Dachrahmen anliegt, mit seiner Hinterkante hingegen gegenüber dem Dachrahmen (nach außen hin) angehoben ist, ist bislang jedoch nicht bekannt.

Daher wird mit der vorliegenden Erfindung ein die sich in der Ausstellposition ergebende Dachöffnung abdeckendes und sich dabei selbständig positionierendes netzartiges Filterelement vorgeschlagen. Bevorzugt wird das netzartige Filterelement durch einen elastisch verformbaren, dem ausstellbaren Endbereich des Dachteiles sowie dem entsprechenden Dachrahmen-Abschnitt angepaßten und am Endbereich des Dachteiles befestigten Bügel gebildet, der eine die besagte Dachöffnung abdeckende Netzstruktur trägt und der sich in der Ausstellposition des Dachteiles unter Vorspannung stehend am entsprechenden Dachrahmen-Abschnitt abstützt.

Beansprucht wird ferner ein netzartiges Filterelement für ein ausstellbares Dachteil, welches im Sinne einer Nachrüstlösung nachträglich am Dachteil und/oder am Dachrahmen befestigbar ist.

Mit Hilfe eines die sich in der Ausstellposition des Dachteiles ergebende Dachöffnung abdeckenden netzartigen Filterelementes kann ein Eindringen von Fremdkörpern in den Fahrzeuginnenraum sicher verhindert werden. Als derartige Fremkörper seien bspw. Insekten oder durch die Fortbewegung des Fahrzeuges aufgewirbelte Staubpartikel genannt. Bei geeigneter Gestaltung des netzartigen Filterelementes können darüber hinaus auch Windgeräusche gedämpft werden, wobei weiterhin ein im wesentlichen ungehinderter Frischlufteintritt in den Fahrzeuginnenraum über die vom netzartigen Filterelement abgedeckte Dachöffnung möglich ist. Hingegen kann ein Wassereintritt, so bspw. von Schwellwasser beim Bremsen des Fahrzeuges, über diese Dachöffnung durch das netzartige Filterelement verhindert werden.

Besonders vorteilhaft ist dabei die Tatsache, daß sich dieses Filterelement bei einer Ausstellbewegung des Dachteiles selbsttätig in die gewünschte Position bringt, vorzugsweise unter Einfluß einer Vorspannung, bspw. mit Hilfe eines eine geeignete Netzstruktur tragenden, elastisch verformbaren Bügels. Letzterer kann somit lediglich am Dachteil befestigt sein, während er sich in der ausgestellten Position desselben am entsprechenden Dachrahmen-Abschnitt abstützt. Auf diese Weise kann das netzartige Filterelement allen möglichen Bewegungen des Dachteiles folgen. Dieses Dachteil kann dann nämlich bevorzugt nicht nur die geschlossene sowie die sog. ausgestellte Position einnehmen, sondern kann wie ein übliches Schiebe-Hebe-Dach alternativ auch in Fahrzeuglängsrichtung verschoben werden.

Dies geht auch aus der folgenden Beschreibung eines bevorzugten Ausführungsbeispieles der Erfindung hervor, welches in den beigefügten Figuren teilweise stark abstrahiert dargestellt ist. Erfindungswesentlich können dabei sämtliche näher beschriebenen Merkmale sein. Im einzelnen zeigt
- Fig. 1: eine vereinfachte Perspektivansicht eines erfindungsgemäßen ausgestellten Dachteiles mit einem Filterelement,
- Fig. 2: eine analoge Perspektivansicht alleine des Filterelementes,
- Fig. 3a: einen Längsschnitt durch den Dachausschnitt, wobei sich das ausstellbare Dachteil in einer abgesenkten, eine Längsverschiebung des Dachteiles einleitenden Position befindet,
- Fig. 3b: den der Fig. 3a entsprechenden Längsschnitt, wobei sich das Dachteil in der ausgestellten Position befindet.

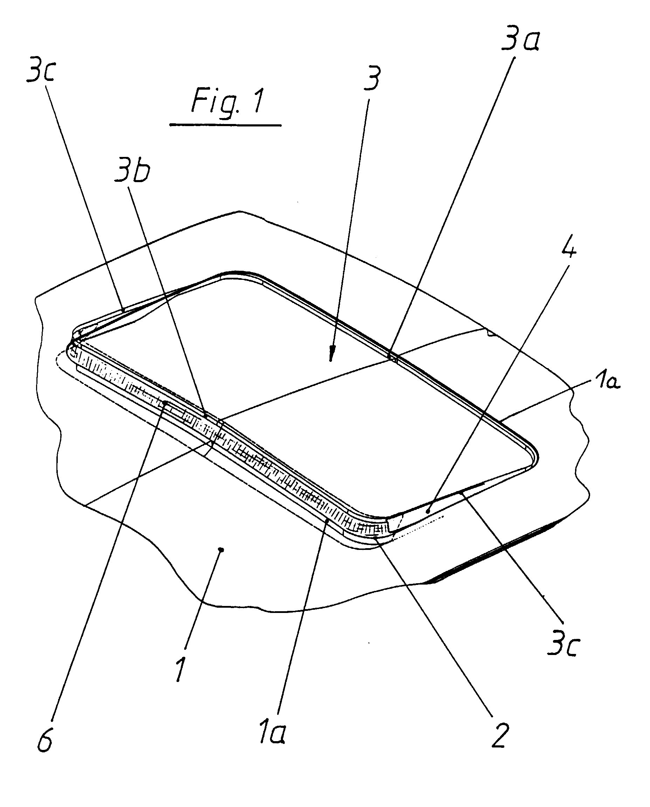

Mit der Bezugsziffer 1 ist das Fahrzeugdach eines PKW's bezeichnet, in welchem ein an sich übliches Schiebehebedach vorgesehen ist, d.h. das einem Dachausschnitt 2 angepaßte Dachteil 3 ist in Längsrichtung des Fahrzeuges bzw. Personenkraftwagens verschiebbar, aber insbesondere auch ausstellbar. Bei dieser Ausstellbewegung verbleibt die Vorderkante 3a des Dachteiles 3 am den Dachausschnitt 2 begrenzenden Rahmen 1a anliegend, während die Hinterkante 3b des Dachteiles 3 gegenüber diesem Rahmen 1a bzw. gegenüber dem diesen Rahmen 1a bildenden festen Fahrzeugdach 1 angehoben ist. In dieser Position ist das Dachteil 3 in den **Figuren 1 und 3b** dargestellt.

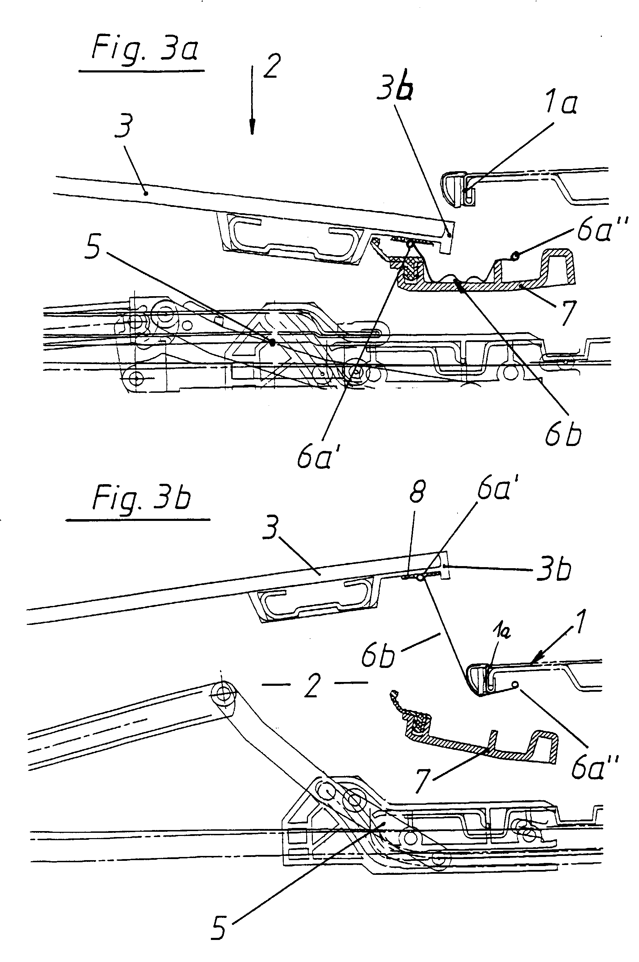

Beim hier gezeigten Ausführungsbeispiel ist an den beiden Seitenkanten 3c des Dachteiles 3 jeweils eine sog. Sichtblende 4 angebracht, so daß die beiden sich in der ausgestellten Position des Dachteiles 3 ergebenden seitlichen keilförmigen Spalte von dieser Sichtblende 4 zumindest teilweise, d.h. über eine gewisse sich von der Vorderkante 3a in Richtung der Hinterkante 3b erstreckenden Strecke abgedeckt sind. Eine solche Sichtblende 4 ist im übrigen auch in der eingangs genannten DE 34 42 616 C2 gezeigt. Über den von der Sichtblende 4 abgedeckten Bereich können somit auch keine Gegenstände oder dergleichen von außen durch den Dachausschnitt 2 in den Fahrzeuginnenraum gelangen. Insbesondere wird auch die in den **Figuren 3a, 3b** in ihrer Gesamtheit mit der Bezugsziffer 5 bezeichnete Betätigungskinematik für das Dachteil 3 im Bereich der Sichtblende 4 vor einer Verschmutzung bspw. durch vom Fahrzeug aufgewirbelten Sand, der ebenfalls in den Dachausschnitt 2 eindringen könnte, geschützt, da die Sichtblende 4 im wesentlichen direkt an den Seitenkanten 3c des Dachteiles 3 und somit außerhalb der Betätigungskinematik 5 angebracht ist.

In die ausgestellte Position gebracht wird das Dachteil 3, um über die sich in dieser Position unterhalb der Hinterkante 3c ergebende Dachöffnung 2 einen Eintritt von Frischluft bzw. Umgebungsluft in den Fahrzeuginnenraum zu ermöglichen. Dies bedeutet aber, daß über diese Dachöffnung 2 dann auch kleine Gegenstände oder Insekten in den Fahrzeuginnenraum gelangen könnten. Auch können bereits erwähnte aufgewirbelte Sandpartikel oder dgl. über diese sich in der Ausstellposition des Dachteiles 3 ergebende Dachöffnung 2 letztlich in den Fahrzeuginnenraum gelangen. Dies ist jedoch nicht nur für die sich im Fahrzeuginnenraum befindenden Insassen unangenehm, sondern derartige Partikel können auch die genannte Betätigungskinematik 5 zumindest geringfügig schädigen.

Als Abhilfemaßnahme für diese Problematik ist ein netzartiges Filterelement 6 vorgesehen, welches diese sich in der Ausstellposition abseits der Sichtblenden 4 ergebende Dachöffnung 2 abdeckt und welches mit einer Ausstellbewegung des Dachteiles 3 selbsttätig in die dementsprechende Position gelangt. Letzteres ist relativ einfach möglich, wenn das flächige Filterelement 6 mit einer Randkante 6a' am Dachteil 3 im Bereich von dessen Hinterkante 3b bevorzugt an der Unterseite des Dachteiles 3 befestigt ist. Mit seinem gegenüberliegenden Randkanten-Bereich stützt sich dabei das netzartige, flächige Filterelement 6 unter Vorspannung stehend am Rahmen 1a des Dachausschnittes 2 ab, wenn sich das Dachteil 3 in seiner ausgestellten Position befindet, wie insbesondere aus **Fig.3b** hervorgeht.

Wird ausgehend von der Ausstellposition das Dachteil 3 in seine abgesenkte Position gebracht, so wird dieses Filterelement 6 zusammengefaltet, wie dies an späterer Stelle in Verbindung mit **Fig.3a** noch kurz erläutert wird. Wesentlich ist, daß das netzartige Filterelement 6 in der ausgestellten Position des Dachteiles 3 jegliches Eindringen von Gegenständen oder dgl. in den Dachausschnitt 2 verhindern kann, dabei jedoch weiterhin einen ausreichenden Frischluftdurchtritt ermöglicht, so daß die gewünschte Belüftungsfunktion nicht oder nur unwesentlich beeinträchtigt wird. In entsprechender Weise ist die Maschenweite des netzartigen Filterelementes 6 zu wählen, wobei anstelle eines Netzes für dieses Filterelement auch eine andere geeignete Struktur, die die gewünschten Eigenschaften besitzt, verwendet werden kann.

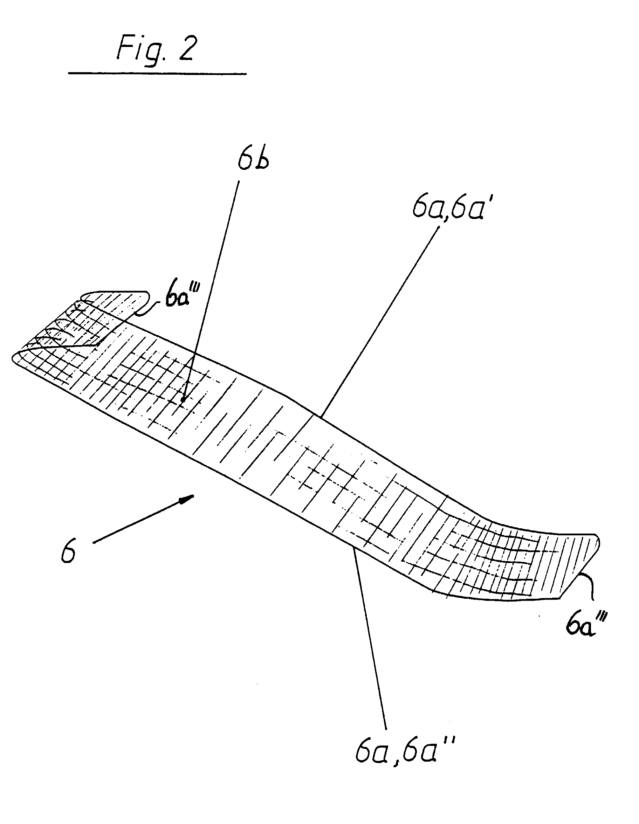

Wie **Fig.2** zeigt, wird das netzartige Filterelement 6 durch einen elastisch verformbaren, dem ausstellbaren Endbereich des Dachteiles 3 sowie dem entsprechenden Abschnitt des Dachrahmens 1a angepaßten Bügel 6a gebildet, an welchem eine Netzstruktur 6b (oder dgl.) befestigt ist. Dargestellt ist das Filterelement 6 dabei in der Ausstellposition des Dachteiles 3, in welcher der Bügel eine flächige Struktur aufspannt, die von der dann ebenfalls gespannten Netzstruktur 6b abgedeckt ist. Neben zwei Seitenkanten 6a''' wird diese flächige Struktur von einer Oberkante 6a' und einer Unterkante 6a'', die durch den Bügel 6 gebildet werden, begrenzt. Zwischen diesen Kanten 6a', 6a'' und 6a''' ist die Netzstruktur 6b aufgehängt.

Die Oberkante 6a' des Bügels 6a ist dabei im Bereich der Hinterkante 3b an der dem Fahrzeuginnenraum zugewandten Unterseite des Dachteiles 3 sowie an den hinteren Endkanten der seitlichen Sichtblenden 4 befestigt, wozu dieser Bügel 6a entsprechend geformt ist, d.h. in seinen seitlichen Randbereichen ist dieser Bügel 6a entsprechend gebogen. Im Bereich nahe seiner Unterkante 6a'' stützt sich der Bügel 6a in diesem Zustand am entsprechenden Abschnitt des Dachrahmens 1a ab, wie aus der später noch kurz erläuterten **Fig.3b** hervorgeht. Aus dieser Erläuterung wird ersichtlich, daß mit einer Absenkbewegung des Dachteiles 3, d.h. wenn dessen Hinterkante 3b zum Anliegen an den den Dachausschnitt 2 begrenzenden Rahmen 1a gebracht wird, die Oberkante 6a' des Bügels 6a teilweise zur Unterkante 6a'' hinbewegt wird, wobei nicht nur der Bügel 6a elastisch verformt, sondern auch die Netzstruktur 6b zusammengefaltet wird.

Der letztgenannte Zustand ist in **Fig.3a** dargestellt. Hier befindet sich das Dachteil 3 in einer soweit abgesenkten Position, daß dieses ausgehend von dieser Position - wie bei Schiebehebedächern bzw. bei einem Schiebe-Dachteil üblich - nach hinten (d.h. in dieser Figurendarstellung nach rechts) verschoben werden kann. Wie ersichtlich ist die Netzstruktur 6b des Filterelementes 6 in dieser Position des Dachteiles 3 - aber auch in derjenigen, in welcher die Hinterkante 3b des Dachteiles 3 bündig am Rahmen 1a des Fahrzeugdaches 1 anliegt, d.h. wenn sich das Dachteil 3 in der geschlossenen Position befindet - in einer an der Betätigungskinematik 5 in nicht dargestellter Weise befestigten Wasserfangrinne 7 teilweise zusammengefaltet abgelegt.

**Fig.3b** zeigt entsprechend der Darstellung von **Fig.3a** das Dachteil 3 wieder in der ausgestellten Position. Hier erkennt man deutlich, daß die sich dabei ergebende Dachöffnung 2 vom Filterelement 6 bzw. genauer von der Netzstruktur 6b desselben abgedeckt ist, um das Eindringen von Fremdkörpern und dgl. in den Dachausschnitt 2 von außen zu verhindern, wobei aber weiterhin ein Frischlufteintritt möglich ist. Ferner erkennt man in **Fig.3b**, daß der Bügel 6a des Filterelementes 6 mit seiner Oberkante 6a' mittels sog. Velcro-Bänder 8 (mittels Klebebändern) am Dachteil 3 (sowie an den Sichtblenden 4) befestigt ist. Im Bereich seiner Unterkante 6a'' stützt sich der Bügel 6a dann unter Vorspannung stehend am den Dachausschnitt 2 begrenzenden Rahmen 1a ab.

Mit Hilfe der genannten Befestigungsweise über Velcrobänder 8, anstelle derer aber auch andere Befestigungsmittel zum Einsatz kommen können, ist es im übrigen vorteilhafterweise möglich, das beschriebene netzartige Filterelement 6 im Sinne einer Nachrüstlösung auch noch nachträglich an einem ausstellbaren Dachteil 3 bzw. an einem Schiebehebedach oder dgl. anzubringen, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen.

### Bezugszeichenliste:

- 1: Fahrzeugdach
- 1a: Rahmen (von 1, der 2 begrenzt)
- 2: Dachausschnitt
- 3: (ausstellbares) Dachteil
- 3a: Vorderkante von 3
- 3b: Hinterkante von 3
- 3c: Seitenkante von 3
- 4: Sichtblende
- 5: Betätigungskinematik
- 6: netzartiges Filterelement
- 6a: Bügel
- 6a': Oberkante von 6a
- 6a'': Unterkante von 6a
- 6a''': Seitenkante
- 6b: Netzstruktur
- 7: Wasserfangrinne
- 8: Velcroband

## Patentansprüche

1. Ausstellbares Dachteil (3) eines Fahrzeuges, insbesondere ausstellbares Schiebe-Dachteil eines Personenkraftwagens mit einem die sich in der Ausstellposition ergebende Dachöffnung (2) abdeckenden und sich dabei selbständig positionierenden netzartigen Filterelement (6).

2. Ausstellbares Dachteil nach Anspruch 1,
dadurch gekennzeichnet, daß das netzartige Filterelement (6) durch einen elastisch verformbaren, dem ausstellbaren Endbereich des Dachteiles (3) sowie dem entsprechenden Abschnitt des Dachrahmens (1a) angepaßten und am Endbereich des Dachteiles (3) befestigten Bügel (6a) gebildet wird, der eine die besagte Dachöffnung (2) abdeckende Netzstruktur (6b) trägt und der sich in der Ausstellposition des Dachteiles (3) unter Vorspannung stehend am entsprechenden Abschnitt des Dachrahmens (1a) abstützt.

3. Netzartiges Filterelement für ein ausstellbares Dachteil nach Anspruch 1 oder 2, welches nachträglich am Dachteil (3) und/oder am Dachrahmen (1a) befestigbar ist.
